(19) Europäisches Patentamt / European Patent Office / Office européen des brevets

(11) **EP 4 746 315 A1**

(12) **DEMANDE DE BREVET EUROPEEN**

(43) Date de publication:
**20.05.2026 Bulletin 2026/21**

(21) Numéro de dépôt: **25215779.7**

(22) Date de dépôt: **14.11.2025**

(51) Classification Internationale des Brevets (IPC):
*H04B 10/118* [(2013.01)] *H04B 10/70* [(2013.01)]

(52) Classification Coopérative des Brevets (CPC):
**H04B 10/118; H04B 10/70**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **15.11.2024 FR 2412478**

(71) Demandeur: **THALES**
**92190 Meudon (FR)**

(72) Inventeurs:
• **BERTRAND, Mathieu**
  **31037 Toulouse Cedex 1 (FR)**

• **AYMERIC, Raphaël**
  **31000 Toulouse (FR)**
• **VAN DEN BOSSCHE, Mathias**
  **31000 Toulouse (FR)**
• **SOTOM, Michel, Alain, Jean-Paul**
  **31037 Toulouse Cedex 1 (FR)**
• **DEMUR, Romain**
  **91767 Palaiseau Cedex (FR)**
• **DOT, Audrey**
  **91767 Palaiseau Cedex (FR)**

(74) Mandataire: **Lavoix**
**2, place d'Estienne d'Orves**
**75441 Paris Cedex 09 (FR)**

(54) **DISPOSITIF DE RÉCEPTION AMÉLIORÉ POUR UNE INTERFACE BORD-SOL D'UN RÉSEAU D'INFORMATION QUANTIQUE**

(57) Ce dispositif (10) comporte : une unité optique (11) pour capter un photon intriqué émis à une fréquence d'émission ($v_s$) depuis un satellite (3), un convertisseur de fréquence (16), et une mémoire quantique (14) de stockage de photons intriqués, le convertisseur de fréquence comportant : un cristal non-linéaire (50) ; une source accordable (52) ; et, des moyens de commande (54) de la source accordable, le cristal non-linéaire générant un photon intriqué secondaire à partir du photon intriqué capté et d'un photon de conversion généré par la source accordable, les moyens de commande pilotant la source accordable pour modifier une fréquence de génération du photon de conversion afin que le photon intriqué secondaire soit compatible de la mémoire quantique, alors que le photon intriqué capté a sa fréquence d'émission affectée d'un décalage Doppler dû au défilement du satellite.

$$F_1 = S_1 + R_1$$
$$F_2 = S_2 + R_2$$

FIG.1

EP 4 746 315 A1

**Description**

L'invention se situe dans le domaine technique des réseaux d'information quantique incluant un segment satellitaire.

Un réseau d'information quantique a pour fonction de partager des ressources d'information quantique, appelées « intrications », entre des utilisateurs distants, afin de connecter des instruments tels que des ordinateurs quantiques, des senseurs quantiques ou encore de générer et d'échanger entre lesdits utilisateurs des clés de cryptage hautement sécurisées.

Typiquement, une source génère une paire de photons au cours d'un processus quantique. Les états quantiques individuels des deux photons générés sont corrélés. On parle d'états intriqués et de photons intriqués.

Chaque photon est alors transmis vers un récepteur disposant d'un dispositif de mesure. Lorsqu'une mesure est effectuée sur un premier photon de la paire de photons intriqués, l'état quantique de ce premier photon est alors déterminé par le dispositif de mesure. Du fait de l'intrication avec le second photon, autrement dit la très forte corrélation entre les propriétés quantiques des deux photons, une opération de mesure sur le second photon ne peut conduire qu'à certaines valeurs conditionnées par le résultat de la mesure sur le premier photon.

Ainsi, à cause de l'intrication des états individuels des photons, une information quantique est partagée entre les deux récepteurs dès qu'une mesure ou l'équivalent d'une mesure est effectuée par l'un des récepteurs.

Les briques de base d'un réseau d'information quantique sont ainsi des sources de photons intriqués, des mémoires quantiques servant à stocker un photon intriqué pendant un temps déterminé, et des récepteurs permettant d'effectuer des mesures, notamment une mesure d'états de Bell entre deux photons afin de propager l'intrication des paires de photons à des mémoires quantiques distantes.

Dans un réseau d'information quantique incluant un segment satellitaire, la configuration la plus simple consiste à placer un dispositif émetteur, intégrant la source de photons intriqués à bord d'un satellite.

Le dispositif émetteur produit un premier signal d'intérêt à partir des premiers photons intriqués de chaque paire produite et un second signal d'intérêt à partir des seconds photons intriqués de chaque paire produite.

Le premier et second signaux d'intérêt sont respectivement transmis vers deux stations au sol, ces stations étant très éloignées l'une de l'autre.

Chaque station au sol comporte un dispositif de réception.

Le dispositif de réception possède des moyens optiques, permettant de recevoir le signal d'intérêt, ainsi qu'une mémoire quantique, permettant de stocker un ou plusieurs des photons intriqués du signal d'intérêt reçu.

La mémoire quantique permet de stocker un photon intriqué, avant d'effectuer par exemple une mesure d'états de Bell à la demande.

La difficulté dans une telle configuration réside principalement dans les variations de fréquence des ondes électromagnétiques induites par le mouvement relatif du satellite par rapport à la station au sol.

En effet, lorsque le satellite est défilant, il présente une vitesse radiale instantanée $\overrightarrow{V_R}(t)$ par rapport à la station au sol.

Ce mouvement relatif est à l'origine d'un décalage en fréquence des signaux électromagnétiques émis par le satellite et reçus par la station au sol, ou effet Doppler.

Plus précisément, lors du passage du satellite en orbite au-dessus de la station au sol, la fréquence des photons émis subit un décalage Doppler $\Delta v_{Doppler}$ de :

$$\Delta v_{Doppler}(t) = \frac{v_R(t)}{c} v_s$$

Où $t$ est le temps, $v_R(t)$ est l'amplitude de la vitesse radiale instantanée du satellite vue depuis la station au sol, $c$ est la célérité de la lumière dans le vide, et $v_s$ est la fréquence avec laquelle les photons intriqués sont produits par la source à bord du satellite.

Ainsi, un photon intriqué généré à la fréquence d'émission $v_s$, est reçu à la fréquence de réception $v_r$, qui correspond à la fréquence d'émission augmentée du décalage Doppler instantané :

$$v_r(t) = v_s + \Delta v_{Doppler}(t)$$

Comme illustré sur la figure 4 de l'article écrit par Shoji et al, Y. (2012, August). A Pilot-Carrier Coherent LEO-to-Ground Downlink System Using an Optical Injection Phase Lock Loop (OIPLL) Technique. JOURNAL OF LIGHTWAVE TECHNOLOGY, 30(16), le décalage Doppler varie continûment lors du passage du satellite.

Typiquement, l'amplitude du décalage Doppler induit par un satellite défilant en orbite basse sur un photon dit télécom (-1500nm - IR - 30 THz) évolue entre environ -5GHz à +5GHz en fonction de la vitesse radiale instantanée du satellite vue depuis la station au sol.

Cependant, la bande de fréquence sur laquelle la mémoire quantique d'un dispositif de réception est sensible est moins large que l'amplitude du décalage Doppler au cours du passage du satellite au-dessus de la station au sol.

Les mémoires quantiques, par exemple du type par transparence induite électomagnétiquement - EIT (« Electromagnetically induced transparency ») ou du type peigne de fréquence atomique - AFC (« atomic frequency comb »), à base par exemple de cristaux dopés terres rares ou d'atomes froids, ont des bandes passantes spectrales fines, de l'ordre de 1MHz à 1GHz autour d'une fréquence caractéristique $v_m$. Cette bande de fréquence est bien plus faible que l'amplitude du décalage Doppler.

Il apparaît donc nécessaire de prendre en compte l'effet Doppler venant altérer la fréquence vue par le dispositif de réception pour pouvoir stocker efficacement un photon intriqué dans la mémoire quantique de ce dispositif de réception.

Pour obtenir une bonne efficacité de couplage à la mémoire quantique, une possibilité consiste à utiliser des mémoires quantiques ayant une bande-passante plus large. Cependant, développer de telles mémoires reste particulièrement complexe. Actuellement, aucune technologie ne permet d'obtenir une bande-passante de l'ordre de 10GHz.

Une autre possibilité, évoquée dans l'article Chapman et al, J. (2022). Hyperentangled Time-Bin and Polarization Quantum Key Distribution. Phys. Rev. Applied, 18, 044027 consiste à ajuster dynamiquement la fréquence avec laquelle les photons intriqués sont émis pour compenser l'effet Doppler .

Mais cette possibilité présente de nombreux inconvénients, comme :

- la nécessité pour le satellite de connaitre la station au sol visée et de calculer en conséquence le décalage Doppler à l'avance, pour pouvoir le compenser en ajustant la fréquence d'émission de la source à bord du satellite, et ceci pour chaque instant de la communication sol- bord, ce qui rend la planification particulièrement complexe, d'autant qu'une compensation dépendante d'un calcul est toujours imparfaite ;
- la nécessité de pouvoir accorder dynamiquement le laser de pompe de la source de photons intriqués, ce qui augmente la complexité et diminue la robustesse de la charge utile du satellite, avec possiblement une variation de l'efficacité de génération de photons intriqués à des fréquences de pompe différentes.

Une autre possibilité, évoquée dans l'article précédent, consiste à décaler la fréquence d'entrée de la mémoire quantique.

Il faut déjà pour cela trouver un mécanisme physique permettant cette opération, car les mémoires quantiques sont fondées sur des transitions atomiques possédant une fréquence absolue. L'utilisation d'un champ magnétique peut permettre de modifier la fréquence centrale des mémoires quantiques à atomes froids.

Une fois le mécanisme physique trouvé pour la technologie de mémoire quantique utilisée, le décalage de la fréquence induit des dégradations sur les performances critiques de la mémoire quantique (efficacité de stockage, temps de cohérence, etc.).

De plus, comme pour la précédente possibilité, les inconvénients liés à la connaissance précise de l'orbitographie du satellite et celles de la planification de la mission sont rédhibitoires.

Ainsi, il apparaît difficile de modifier les caractéristiques des sources de photons intriqués et/ou des mémoire quantiques sans augmenter la complexité des dispositifs d'émission et de réception, ni affecter leur efficacité, notamment le temps de cohérence de la mémoire quantique.

Le but de l'invention est alors de proposer une solution à ce problème de prise en compte de l'effet Doppler d'une manière particulièrement simple.

A cet effet, l'invention a pour objet un dispositif de réception d'un signal d'intérêt destiné à équiper une interface entre un satellite et une station au sol d'un réseau d'information quantique incluant un segment satellitaire, le signal d'intérêt comportant au moins un photon intriqué, le dispositif de réception comportant : une unité optique pour capter un faisceau incident transportant le signal d'intérêt, le signal d'intérêt étant émis à une fréquence d'émission $v_s$ par un dispositif d'émission de ladite interface ; et, une mémoire quantique de stockage de photons intriqués, le dispositif de réception étant caractérisé en ce qu'il comporte en outre un convertisseur de fréquence intercalé entre l'unité optique et la mémoire quantique, le convertisseur de fréquence comportant : un moyen de conversion de fréquence comportant un cristal non-linéaire et des composants optiques ; une source accordable de génération d'un signal de conversion comportant des photons de conversion ; et, des moyens de commande de la source accordable, le cristal non-linéaire du moyen de conversion en fréquence étant capable de générer un photon intriqué secondaire à partir, d'une part, du photon intriqué du signal d'intérêt reçu par l'unité optique et, d'autre part, d'un photon du signal de conversion, les moyens de commande pilotant la source accordable de manière à modifier une fréquence de conversion avec laquelle la source accordable génère le signal de conversion pour que le photon intriqué secondaire présente une fréquence ajustée à une bande de fréquence d'entrée caractéristique de la mémoire quantique, alors que le signal d'intérêt reçu présente une fréquence de réception correspondant à la fréquence d'émission affectée d'un décalage Doppler $\Delta v_{Doppler}(t)$du à un défilement du satellite par rapport à la station au sol.

Suivant d'autres aspects avantageux de l'invention, le récepteur comprend une ou plusieurs des caractéristiques suivantes, prises isolément ou suivant toutes les combinaisons techniquement possibles :

- le cristal non-linéaire du moyen de conversion en fréquence sommant les fréquences du photon intriqué et du photon de conversion, les moyens de commande pilotent la source accordable de manière à ce que la fréquence de conversion compense à chaque instant le décalage Doppler.
- les moyens de commande comportent un calculateur programmé de manière à calculer une valeur instantanée du décalage Doppler affectant la fréquence du signal d'intérêt reçu, les moyens de commande étant adaptés pour appliquer un signal de commande à la source accordable , le signal de commande étant fonction de la valeur instantanée du décalage Doppler calculée.
- le dispositif d'émission étant adapté pour produire un signal de référence à une fréquence de référence prédéfinie et le faisceau incident transportant, outre le signal d'intérêt, le signal de référence, l'unité optique est adaptée pour séparer le signal de référence reçu du signal d'intérêt reçu et à transmettre le signal de référence reçu vers les moyens de commande, les moyens de commande étant adaptés pour évaluer un écart instantané entre une fréquence du signal de référence reçu avec la fréquence de référence, et à appliquer un signal de commande à la source accordable qui est fonction de l'écart instantané évalué.
- la source accordable du signal de conversion est un laser de pompe accordable.
- la source accordable du signal de conversion comporte un laser associé à un modulateur optique.
- la source accordable du signal de conversion comporte, en outre, un filtre et/ou un amplificateur.

L'invention a également pour objet un dispositif d'émission de photons intriqués destiné à équiper une interface entre un satellite et une station au sol d'un réseau d'information quantique incluant un segment satellitaire, le dispositif d'émission comportant : une source de photons intriqués; une unité optique pour émettre un faisceau incident transportant un photon intriqué généré par la source de photons intriqués, vers un dispositif de réception intégrant une mémoire quantique de stockage de photons intriqués, le dispositif d'émission étant caractérisé en ce qu'il comporte en outre un convertisseur de fréquence interposé entre la source de photons intriqués et l'unité optique, le convertisseur de fréquence comportant : un moyen de conversion de fréquence comportant un cristal non-linéaire et des composants optiques ; une source accordable de génération d'un signal de conversion comportant des photons de conversion ; et, des moyens de commande de la source accordable, le cristal non-linéaire du moyen de conversion en fréquence étant capable de générer un photon intriqué secondaire à partir, d'une part, du photon intriqué généré par la source de photons intriqués et, d'autre part, d'un photon de conversion émis par la source accordable, le moyen de commande pilotant la source accordable de manière à modifier une fréquence de conversion avec laquelle la source accordable génère le signal de conversion pour que le photon intriqué secondaire présente, une fois affectée d'un décalage Doppler au cours de sa transmission entre le satellite et la station au sol, une fréquence ajustée à une bande de fréquence d'entrée caractéristique de la mémoire quantique du dispositif de réception.

L'invention apparaîtra plus clairement à la lecture de la description qui va suivre, donnée uniquement à titre d'exemple non limitatif, et faite en référence au dessin annexé dans lequel :

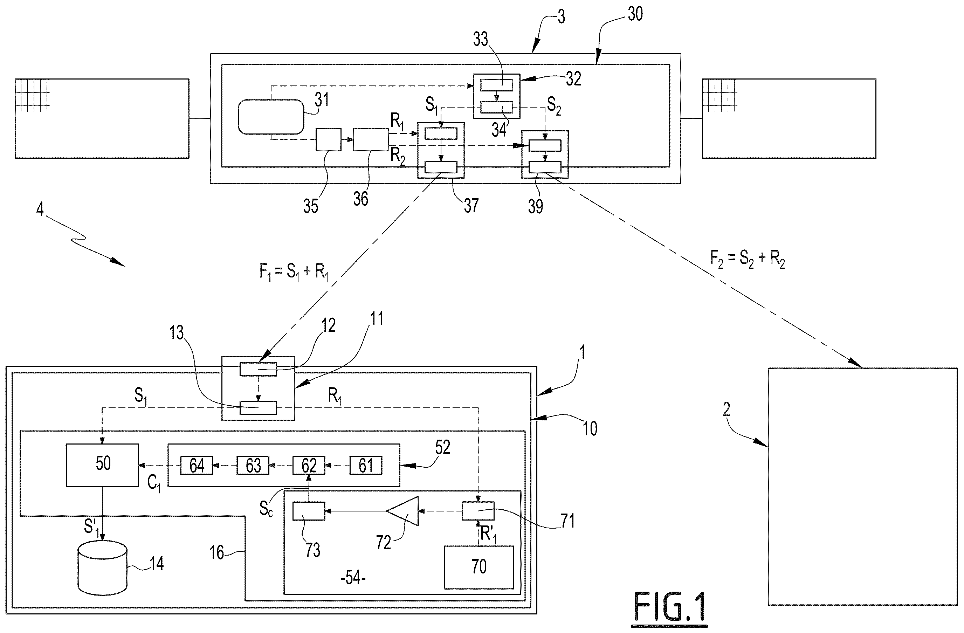

- La figure 1 est une représentation schématique d'un mode de réalisation préféré d'un dispositif de réception selon l'invention pour une interface bord-sol d'un réseau d'information quantique.

De manière générale, l'invention consiste à utiliser un dispositif de conversion de fréquence fondé sur l'utilisation d'un cristal non-linéaire pour compenser le décalage Doppler sur les photons intriqués et ainsi obtenir des photons intriqués dits secondaires dont la fréquence (ou la longueur d'onde) est adaptée aux propriétés de la mémoire quantique.

En se reportant à la figure 1, un mode de réalisation préféré de l'invention va être présenté.

La figure 1 représente la partie d'interface bord-sol d'un réseau d'information quantique 4 présentant une composante satellitaire.

L'interface bord-sol relie un satellite 3 à des première et seconde stations au sol 1 et 2, le satellite étant en visibilité des deux stations au sol.

Les stations au sol sont de préférence identiques et seule la première station au sol 1 sera décrite en détail dans ce qui suit. Cependant, une description similaire pourrait être faite de la seconde station au sol 2.

Le satellite 3 est un satellite défilant du type en orbite terrestre basse - « LEO » ou en orbite terrestre moyenne - « MEO ».

Il embarque un dispositif d'émission 30 propre à générer et à transmettre un premier faisceau lumineux F1 vers la première station au sol 1 et un second faisceau lumineux F2 vers la seconde station au sol 2.

Chaque faisceau traverse donc l'atmosphère entre le satellite émetteur et la station au sol destinataire.

Chaque station au sol intègre un dispositif de réception.

Le dispositif de réception de la première station 1 porte la référence 10 sur la figure 1.

Dans le mode de réalisation préféré, la conversion de la fréquence des photons intriqués pour compenser le décalage Doppler est réalisée au sol, par chaque dispositif de réception.

Dans ce cas, le dispositif d'émission 30 est conforme à l'état de la technique.

Il comporte une horloge 31 délivrant un signal temporel absolu.

Il comporte une source de paires de photons intriqués 32. Il s'agit par exemple d'un laser de pompe 33 associé à un système comprenant un cristal non-linéaire 34, qui est adapté pour générer des paires de photons intriqués.

Le laser de pompe 33 fonctionne à une fréquence de pompage caractéristique notée $v_0$. Le laser de pompe 33 est synchronisé sur la référence temporelle fournie par l'horloge 31.

Les états individuels des premier et second photons d'une même paire de photons sont intriqués. Par exemple, l'état individuel d'un photon est donné par son état de polarisation.

Les photons intriqués d'une paire de photons sont générés avec une même fréquence d'émission, connue et prédéfinie, notée $v_s$. En variante, un premier photon de la paire est émis à une première fréquence d'émission et le second photon de la paire est émis à une seconde fréquence d'émission.

La source 32 délivre un premier signal d'intérêt S1 constitué de chaque premier photon d'une paire de photons et un second signal d'intérêt S2 constitué de chaque second photon de la paire de photons.

Par ailleurs, dans le mode de réalisation préféré, le dispositif d'émission 30 comporte un laser de référence 35 adapté pour produire un flux de photons de référence.

Le laser de référence 35 fonctionne à une fréquence de référence, connue et prédéfinie, notée $v_{ref}$. Le laser de référence est synchronisé sur la référence temporelle fournie par l'horloge 31. Les lasers de pompe et de référence, qui partagent la même base temporelle sont par conséquent parfaitement synchronisés.

Le laser de référence 35 est associé à un diviseur optique 36 pour, à partir des photons de référence, produire un premier signal de référence R1 et un second signal de référence R2.

Le dispositif d'émission 30 comporte une première unité optique 37.

Cette dernière intègre un combineur propre à superposer, dans un unique premier faisceau F1, le premier signal de référence R1 et le premier signal d'intérêt S1.

En aval du combineur, la première unité optique 37 comporte un télescope, permettant de pointer le premier faisceau F1 vers la première station au sol 1 au cours du déplacement du satellite 3.

De manière symétrique, le dispositif d'émission 30 comporte une seconde unité optique 3, intégrant un combineur propre à superposer, dans un unique second faisceau F2, le second signal de référence R2 et le second signal d'intérêt S2, et un télescope, permettant de pointer le second faisceau F2 vers la seconde station au sol 2 au cours du déplacement du satellite 3.

Un dispositif de réception, comme le premier dispositif 10, comporte une unité optique de réception 11, un convertisseur de fréquence 16, et une mémoire quantique 14 de stockage de photons intriqués.

La mémoire quantique 14 est caractérisée par une bande passante de fonctionnement optimal en fréquence. La fréquence centrale de cette bande passante est notée $v_m$.

L'unité optique 11 comporte un télescope 12 adapté pour capter le premier faisceau F1 émis par le dispositif d'émission 30 du satellite 3.

Le faisceau incident transporte à la fois le signal d'intérêt S1 et le signal de référence R1. Les photons intriqués et les photons de référence reçus présentent une fréquence apparente, évaluée au niveau du sol, qui est décalée par rapport à la fréquence à laquelle ils ont été produit à cause de l'effet Doppler.

La fréquence apparente des photons intriqués, qui dépend du temps à cause du mouvement relatif du satellite par rapport à la station au sol, est notée $v_s(t)$.

La fréquence apparente des photons de référence, qui dépend du temps à cause du mouvement relatif du satellite par rapport à la station au sol, est notée $v_{ref}(t)$.

L'unité optique 11 comporte un séparateur 13 permettant de décomposer le faisceau incident et de propager le signal d'intérêt S1 vers un moyen de conversion en fréquence 50 du convertisseur de fréquence 16 et le signal de référence vers des moyens de commande 54 du convertisseur de fréquence 16.

Le convertisseur de fréquence 16 intègre le moyen de conversion en fréquence 50, une source accordable 52 de photons de conversion et les moyens de commande 54 pour le pilotage de la source accordable 52.

Le moyen de conversion en fréquence 50 comporte un cristal non-linéaire et des moyens optiques adaptés. Par exemple, pour conserver la polarisation, le cristal non-linéaire doit être placé dans une cavité optique circulaire.

Le cristal non linéaire du moyen de conversion en fréquence 50 couple le signal d'intérêt S1 de fréquence $v_s(t)$ avec un signal de conversion C1 de fréquence $v_p(t)$ pour produire un signal d'intérêt secondaire S1' à une fréquence adaptée aux propriétés de la mémoire quantique, de préférence $v_m$.

Le cristal non-linéaire présente la propriété de générer un photon intriqué secondaire à partir, d'une part, d'un photon intriqué du signal d'intérêt et, d'autre part, d'un photon de conversion du signal de conversion.

Le processus de conversion préserve l'état quantique du photon intriqué incident. C'est donc le photon intriqué secondaire, qui porte l'information quantique, qui sera stocké dans la mémoire quantique 14.

De plus, le processus de conversion reste dans l'acceptance de l'accord de phase du cristal non linéaire, qui est typiquement de plusieurs dizaines de GHz. Dit autrement, la variation nécessaire à la compensation de l'effet Doppler reste dans la bande de fonctionnement du cristal.

La section efficace du processus de conversion étant faible, l'intensité du signal de conversion est ajustée pour être quasiment certain que chaque photon intriqué incident soit converti en un photon intriqué secondaire.

Lors du processus de conversion, la conservation de l'énergie impose que la somme des fréquences entre le photon intriqué incident et le photon de conversion soit égale à la fréquence du photon intriqué secondaire sortant du cristal 50.

Le cristal fonctionne par sommation, le photon intriqué incident présentant une fréquence apparente de réception correspondant à sa fréquence d'émission affectée d'un décalage Doppler, pour compenser ce décalage Doppler à chaque instant t afin que la fréquence du photon intriqué secondaire soit constante et égale à $v_m$, il faut que la fréquence des photons de conversion injectés dans le cristal soit ajustée au cours du temps pour annuler le décalage Doppler.

On a ainsi :

$$v_s(t) + v_p(t) = v_m$$

Soit :

$$(v_s + \Delta v_{Doppler}(t)) + (v_p - \Delta v_{Doppler}(t)) = v_m$$

Où $v_p$ est une fréquence de base de génération des photons de conversion.

Pour ce faire, les photons de conversion sont générés à chaque instant à la fréquence requise par la source accordable 52 pilotée par les moyens de commande 54.

La source accordable est par exemple constituée d'un laser 61, d'un modulateur optique 62, d'un filtre 63 et d'un amplificateur 64.

Le laser 61 est propre à émettre des photons de conversion à la fréquence $v_p$.

Le modulateur optique 62 est adapté pour moduler la fréquences du flux de photons de conversion en sortie du laser 62 en fonction d'un signal de commande Sc pour obtenir un flux de photons de conversion à la fréquence $v_p(t)$.

Le modulateur optique 62 introduisant des harmoniques, il est préférable de filtrer le flux de photons de conversion en sortie du modulateur optique 62. C'est la fonction du filtre 63.

Enfin, pour appliquer sur le cristal non linéaire du moyen de conversion en fréquence 50 un signal de conversion suffisamment intense, le flux de photons de conversion est avantageusement amplifié par l'amplificateur 64.

Dans le mode de réalisation préféré, le moyen de commande 54 intègre un système de mesure pour la génération d'un signal de commande Sc permettant de compenser en temps réel le décalage fréquentiel.

Le moyen de commande 54 utilise le signal de référence R1 pour générer un signal électronique de pilotage Sc de la source des photons de conversion.

Pour ce faire, le moyen de commande 54 comporte une source de référence sol 70, comme un laser dédié, permettant de générer un signal de référence sol R1' constitué de photons de référence sol à la fréquence de référence $v_{ref}$, c'est-à-dire à la fréquence avec laquelle les photons de référence du signal de référence R1 ont été émis par le dispositif d'émission 30 à bord du satellite 3.

Le moyen de commande 54 comporte un combineur 71 permettant de superposer un signal de référence sol R1' et le signal de référence R1 reçu par la station au sol et par conséquent dont la fréquence est affectée du même décalage Doppler que le signal d'intérêt :

$$v_r(t) = v_r + \Delta v_{Doppler}(t)$$

Le moyen de commande 54 comporte une photodiode 72 sur laquelle tombe la combinaison des signaux de référence reçu et de référence sol. La photodiode 72 produit en sortie une tension électrique correspondant au battement optique entre les deux signaux de référence, R1 et R1', c'est-à-dire au décalage Doppler instantané $\Delta v_{Doppler}(t)$.

Le moyen de commande 54 comporte un générateur radiofréquence 73 qui, à partir de l'inversion de la tension électrique en sortie de la photodiode 72, génère le signal de commande Sc.

Celui-ci est appliqué au modulateur optique 62 de la source accordable 52.

Le cristal non-linéaire sommant les fréquences des photons intriqués et de conversion, le décalage Doppler est ainsi compensé et le photon intriqué secondaire présente une fréquence stable, compatible de la bande de fréquence d'entrée caractéristique de la mémoire quantique.

En variante, la fréquence de référence est égale à la fréquence d'émission des photons intriqués.

Dans une autre variante, la source accordable de photons de conversion est un laser dont la cavité présente des parois d'extrémité mobiles de manière à modifier la longueur de la cavité et par conséquent la fréquence avec laquelle les photons sont émis. Le mouvement des parois d'extrémité est piloté par un signal électrique de commande produit par les moyen de commande.

La modulation du signal de conversion, effectuée par modulation directe de la fréquence du laser ou à l'aide d'un modulateur externe, se doit d'être extrêmement précise car aucun rétrocontrôle sur la longueur d'onde des photons de conversion n'est possible après conversion, sans perdre l'information quantique du photons intriqué.

Dans un second mode de réalisation, plutôt que de mesurer le décalage Doppler en temps réel, celui-ci est estimé à partir de l'orbitographie du satellite 3 et de la fréquence d'émission du signal d'intérêt S1.

Les moyens de commande de la source accordable sont alors constitués d'un calculateur convenablement programmé pour calculer le décalage Doppler affectant les signaux électromagnétiques compte tenue de la vitesse radiale instantanée du satellite par rapport à la station au sol considérée.

Par exemple, le calculateur utilise des éphémérides informant de la trajectoire du satellite. Ces éphémérides peuvent être des données de configuration du calculateur ou encore acquises dynamiquement au cours d'une phase initiale d'établissement de la liaison bord-sol.

Le calculateur génère alors un signal électrique de commande de la source accordable de photons de conversion, en fonction du décalage Doppler instantané.

Dans ce mode de réalisation alternatif, il n'est pas nécessaire de prévoir des moyens de génération d'un signal de référence à bord du satellite, ni dans la station au sol.

La conversion de fréquence par optique non linéaire, et en particulier par somme de fréquence, permet de transférer la fréquence du photon incident vers la fréquence de fonctionnement de la mémoire quantique.

L'introduction d'un moyen de conversion en fréquence offre ainsi un nouveau degré de liberté découplant la fréquence des photons intriqués émis par la source et la fréquence de fonctionnement de la mémoire quantique.

Les photons intriqués peuvent alors être émis à une fréquence adaptée (télécom ou plus loin dans l'infrarouge) pour bénéficier des bonnes propriétés de transmission atmosphérique à ces longueurs d'ondes, ainsi qu'une moindre sensibilité aux turbulences par rapport aux plus courtes longueurs d'ondes.

Les mémoires quantiques en revanche fonctionnent pour la plupart à des longueurs d'ondes visibles ou proches infrarouge (795 nm pour les mémoires à base de Rb, 606 nm pour les mémoires à base de cristaux dopés $Pr^{3+}$).

Les photons de conversion sont alors générés pour ramener la fréquence du signal d'intérêt dans la bande de fonctionnement de la mémoire quantique.

L'invention rend ainsi possible le stockage d'un photon unique provenant d'un satellite dans une mémoire quantique située au sol par compensation en temps réel de l'effet Doppler affectant le photon.

L'invention permet d'optimiser l'efficacité de couplage à la mémoire quantique au cours du temps.

L'invention est une brique technologique nécessaire des réseaux de communication quantiques par satellite.

L'invention peut être implémentée dans des dispositifs de réception du réseau d'information quantique. Mais, en variante elle pourrait être implémentée dans des dispositifs d'émission. Dans ce cas, la compensation du décalage Doppler s'effectuant en amont de la transmission, cela ne peut être fait que par calcul et non pas mesure.

Typiquement, les dispositifs de réception sont implémentés dans la station optique au sol, servant à collecter les photons provenant du satellite. Il est cependant envisageable de les placer à bord du satellite pour collecter des photons provenant d'une station au sol.

## Revendications

**1.** Dispositif de réception (10) d'un signal d'intérêt (S1) destiné à équiper une interface entre un satellite (3) et une station au sol (1) d'un réseau d'information quantique (4) incluant un segment satellitaire, le signal d'intérêt comportant au moins un photon intriqué,

le dispositif de réception comportant :

- une unité optique (11, 12) pour capter un faisceau incident transportant le signal d'intérêt, le signal d'intérêt étant émis à une fréquence d'émission ($v_s$) par un dispositif d'émission (30) de ladite interface ; et,
- une mémoire quantique (14) de stockage de photons intriqués,

le dispositif de réception (10) étant **caractérisé en ce qu'**il comporte en outre un convertisseur de fréquence (16) intercalé entre l'unité optique (11, 12) et la mémoire quantique (14), le convertisseur de fréquence comportant :

- un moyen de conversion de fréquence comportant un cristal non-linéaire et des composants optiques (50) ;

- une source accordable (52) de génération d'un signal de conversion (C1) comportant des photons de conversion ; et,
- des moyens de commande (54) de la source accordable,

le cristal non-linéaire du moyen de conversion en fréquence étant capable de générer un photon intriqué secondaire à partir, d'une part, du photon intriqué du signal d'intérêt (S1) reçu par l'unité optique (11, 12) et, d'autre part, d'un photon du signal de conversion (C1), les moyens de commande (54) pilotant la source accordable (52) de manière à modifier une fréquence de conversion avec laquelle la source accordable génère le signal de conversion pour que le photon intriqué secondaire présente une fréquence ajustée à une bande de fréquence d'entrée caractéristique de la mémoire quantique (14), alors que le signal d'intérêt reçu présente une fréquence de réception correspondant à la fréquence d'émission ($v_s$) affectée d'un décalage Doppler ($\Delta v_{Doppler}$ ($t$)) du à un défilement du satellite (3) par rapport à la station au sol (1).

2. Dispositif de réception selon la revendication 1, dans lequel, le cristal non-linéaire du moyen de conversion en fréquence sommant les fréquences du photon intriqué et du photon de conversion, les moyens de commande (54) pilotent la source accordable (52) de manière à ce que la fréquence de conversion compense à chaque instant le décalage Doppler.

3. Dispositif de réception selon la revendication 1 ou la revendication 2, dans lequel les moyens de commande (54) comportent un calculateur programmé de manière à calculer une valeur instantanée du décalage Doppler affectant la fréquence du signal d'intérêt reçu, les moyens de commande étant adaptés pour appliquer un signal de commande (Sc) à la source accordable (52), le signal de commande étant fonction de la valeur instantanée du décalage Doppler calculée.

4. Dispositif de réception selon l'une quelconque des revendications 1 à 2, dans lequel, le dispositif d'émission (30) étant adapté pour produire un signal de référence (R1) à une fréquence de référence ($v_r$) prédéfinie et le faisceau incident transportant, outre le signal d'intérêt (S1), le signal de référence (R1), l'unité optique (11, 12) est adaptée pour séparer le signal de référence (R1) reçu du signal d'intérêt (S1) reçu et à transmettre le signal de référence reçu vers les moyens de commande (54), les moyens de commande étant adaptés pour évaluer un écart instantané entre une fréquence du signal de référence (S1) reçu avec la fréquence de référence ($v_r$), et à appliquer un signal de commande à la source accordable (52) qui est fonction de l'écart instantané évalué.

5. Dispositif de réception selon l'une quelconque des revendications 1 à 4, dans laquelle la source accordable (52) du signal de conversion (C1) est un laser de pompe accordable.

6. Dispositif de réception selon l'une quelconque des revendications 1 à 4, dans laquelle la source accordable (52) du signal de conversion (C1) comporte un laser (61) associé à un modulateur optique (62).

7. Dispositif de réception selon la revendication 6, dans laquelle la source accordable (52) du signal de conversion (C1) comporte, en outre, un filtre (63) et/ou un amplificateur (64).

8. Dispositif d'émission (30) de photons intriqués destiné à équiper une interface entre un satellite (3) et une station au sol (1) d'un réseau d'information quantique (4) incluant un segment satellitaire, le dispositif d'émission comportant :

- une source de photons intriqués (32) ;
- une unité optique (37) pour émettre un faisceau incident transportant un photon intriqué généré par la source de photons intriqués, vers un dispositif de réception (10) intégrant une mémoire quantique (34) de stockage de photons intriqués,

le dispositif d'émission (30) étant **caractérisé en ce qu'**il comporte en outre un convertisseur de fréquence interposé entre la source de photons intriqués et l'unité optique, le convertisseur de fréquence comportant :

- un moyen de conversion de fréquence comportant un cristal non-linéaire et des composants optiques ;
- une source accordable de génération d'un signal de conversion (C1) comportant des photons de conversion ; et,
- des moyens de commande de la source accordable,

le cristal non-linéaire du moyen de conversion en fréquence étant capable de générer un photon intriqué secondaire à partir, d'une part, du photon intriqué généré par la source de photons intriqués et, d'autre part, d'un photon de conversion émis par la source accordable, le moyen de commande pilotant la source accordable de manière à modifier une fréquence de conversion avec laquelle la source accordable génère le signal de conversion pour que le photon intriqué secondaire présente, une fois affectée d'un décalage Doppler au cours de sa transmission entre le satellite et la station au sol, une fréquence ajustée à une bande de fréquence d'entrée caractéristique de la mémoire quantique du dispositif de réception.

$F_2 = S_2 + R_2$

$F_1 = S_1 + R_1$

**FIG.1**

Europäisches
Patentamt

European
Patent Office

Office européen
des brevets

# RAPPORT DE RECHERCHE EUROPEENNE

Numéro de la demande

EP 25 21 5779

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2023/342650 A1 (CHEN KEVIN [US] ET AL) 26 octobre 2023 (2023-10-26) * figures 1,2A,2B * * alinéas [0025], [0035], [0042] - [0045] * | 1-8 | INV. H04B10/118 H04B10/70 |
| A | US 11 641 242 B1 (BHASKAR MIHIR KESHAV [US] ET AL) 2 mai 2023 (2023-05-02) * figure 1A * * colonne 16, lignes 37-56 * | 1-8 | |
| A | JASMINDER S SIDHU ET AL: "Advances in space quantum communications", IET QUANTUM COMMUNICATION, JOHN WILEY & SONS, INC, HOBOKEN, USA, vol. 2, no. 4, 19 juillet 2021 (2021-07-19), pages 182-217, XP006113892, ISSN: 2632-8925, DOI: 10.1049/QTC2.12015 * section 5.5.1 Frequency conversion * | 1-8 | |
| A | DANIELE DEQUAL ET AL: "Feasibility of satellite-to-ground continuous-variable quantum key distribution", ARXIV.ORG, CORNELL UNIVERSITY LIBRARY, 201 OLIN LIBRARY CORNELL UNIVERSITY ITHACA, NY 14853, 20 juillet 2020 (2020-07-20), XP081705551, * figure 1 * * page 7, colonne de droite, alinéa 1 * | 1-8 | DOMAINES TECHNIQUES RECHERCHES (IPC) H04B |
| A | EMANUEL SCHLAKE ET AL: "Pulse shape optimization against Doppler shifts and delays in optical quantum communication", ARXIV.ORG, CORNELL UNIVERSITY LIBRARY, 201 OLIN LIBRARY CORNELL UNIVERSITY ITHACA, NY 14853, 1 octobre 2024 (2024-10-01), XP091903394, * abrégé * | 1-8 | |

Le présent rapport a été établi pour toutes les revendications

| Lieu de la recherche | Date d'achèvement de la recherche | Examinateur |
|---|---|---|
| Munich | 25 mars 2026 | Petitit, Nicolas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P4C02)

**EP 4 746 315 A1**

## ANNEXE AU RAPPORT DE RECHERCHE EUROPEENNE
## RELATIF A LA DEMANDE DE BREVET EUROPEEN NO.

EP 25 21 5779

25-03-2026

| Document brevet cité au rapport de recherche | Date de publication | Membre(s) de la famille de brevet(s) | Date de publication |
|---|---|---|---|
| US 2023342650 A1 | 26-10-2023 | AUCUN | |
| US 11641242 B1 | 02-05-2023 | CN 118541933 A | 23-08-2024 |
| | | EP 4445524 A2 | 16-10-2024 |
| | | US 11641242 B1 | 02-05-2023 |
| | | US 2023327780 A1 | 12-10-2023 |
| | | US 2025038863 A1 | 30-01-2025 |
| | | WO 2023158513 A2 | 24-08-2023 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **SHOJI et al.** A Pilot-Carrier Coherent LEO-to-Ground Downlink System Using an Optical Injection Phase Lock Loop (OIPLL) Technique. *JOURNAL OF LIGHTWAVE TECHNOLOGY*, August 2012, vol. 30 (16)

- **CHAPMAN et al.** Hyperentangled Time-Bin and Polarization Quantum Key Distribution. *Phys. Rev. Applied*, 2022, vol. 18, 044027